# EUROPÄISCHE PATENTSCHRIFT

(11) **EP 0 732 981 B1**
(45) Veröffentlichungstag und Bekanntmachung des Hinweises auf die Patenterteilung: **07.03.2001**
(21) Anmeldenummer: 95902789.7
(22) Anmeldetag: 10.12.1994
(51) Int. Cl.: B23B 5/16, B23Q 17/00, B23B 31/00

(54) **VERFAHREN UND VORRICHTUNG ZUM LAGE- UND MASSGENAUEN ANFASEN EINES ROHRENDES**
PROCESS AND DEVICE FOR CHAMFERING THE END OF A PIPE TO CLOSE POSITIONAL AND DIMENSIONAL TOLERANCES
PROCEDE ET DISPOSITIF PERMETTANT DE BISEAUTER L'EXTREMITE D'UN TUBE DE MANIERE CONFORME AUX TOLERANCES DE POSITION ET DE DIMENSIONS

(30) Priorität: 11.12.1993 DE 4342325
(43) Veröffentlichungstag der Anmeldung: 25.09.1996
(60) Teilanmeldung: 99105648.2
(73) Patentinhaber: MASCHINENFABRIK REIKA-WERK GmbH, D-58099 Hagen (DE)
(72) Erfinder: BRAUN, Hans-Jörg, D-58093 Hagen-Berchum (DE); Mohn, Gerhard, D-51702 Bergneustadt (DE)
(74) Vertreter: Rehders, Jochen, Dipl.-Ing.
(86) Internationale Anmeldenummer: EP9404110
(87) Internationale Veröffentlichungsnummer: WO9515828

(56) Entgegenhaltungen:
- FR-A- 1 563 022
- US-A- 3 256 754
- PATENT ABSTRACTS OF JAPAN vol. 9, no. 303 (M-434) (2026) 30. November 1985 & JP,A,60 141 405 (NITSUSHIN SEIKOU) 26. Juli 1985
- PATENT ABSTRACTS OF JAPAN vol. 9, no. 183 (M-400) (1906) 30. Juli 1985 & JP,A,60 052 212 (SHIN NIPPON SEITETSU) 25. März 1985

## Beschreibung

Die Erfindung betrifft ein Verfahren zum mit Bezug auf den Außen- oder Innendurchmesser eines Rohres lage- und maßgenauen Anfasen eines eingespannten Rohrendes, insbesondere zum Anbringen einer Schweißfase, die in der Regel maßgenau mit Bezug auf die Rohrinnenfläche angebracht werden muß, um eine allen Ansprüchen gerecht werdende Schweißverbindung zwischen aneinanderstoßenden Rohrenden herstellen zu können. Das Herstellen einer solchen Schweißfase ist problematisch, da bei nahtlosen Rohren eine nicht unerhebliche Unrundheit sowie Wanddickenabweichungen durch radialen Versatz des Innendurchmessers gegenüber dem Außendurchmesser auftreten können. Bei geschweißten Rohren tritt zwar keine große Wanddickenabweichung auf, jedoch können diese Rohre eine starke Ovalität und im Bereich der Schweißnaht innen und/oder außen Buckel aufweisen. Auch ist bei nahtlosen und geschweißten Rohren eine Durchmesserabweichung zulässig, die eine genaue Schweißnahtvorbereitung ohne Bezugnahme auf den tatsächlichen Rohrinnen- oder -außendurchmesser nicht gewährleistet

Die Unrundheit des Rohres läßt sich gemäß der US-Patentschrift 3 724 303, die ein Verfahren mit den Merkmalen des Oberbegriffs des Anspruchs 1 zeigt, in der eine Vorrichtung zum kombinierten Abstechen und Anfasen von Rohrenden beschrieben ist, dadurch kompensieren, daß das Faswerkzeug an einem Werkzeughalter angeordnet ist, der sich über eine Rolle oder Kugel auf der Rohraußenfläche federnd abstützt. Auf diese Weise lassen sich sowohl eine Außenfase als auch eine Innenfase lage- und maßgenau gegenüber dem Außenumfang des Rohres anbringen. Soll eine Außen- und/oder Innenfase lage- und maßgenau gegenüber der Rohrinnenfläche angebracht werden, muß sich der Werkzeughalter in entsprechender Weise an der Rohrinnenfläche abstützen. Diese bekannte Vorrichtung arbeitet somit nach einem Kopierverfahren mit einer mechanischen Tastvorrichtung, die direkt mit dem Faswerkzeug in Wirkverbindung steht.

Nachteilig bei dieser bekannten Vorrichtung ist, daß sich der Bearbeitungsgang des Anfasens nicht in einen schnellen Schruppbearbeitungsgang und einen langsameren Schlichtbearbeitungsgang unterteilen läßt, so daß der Vorschub für den gesamten Bearbeitungsgang entsprechend dem für die geforderte Oberflächengüte erforderlichen Schlichtbearbeitungsgang bemessen werden muß. Dadurch wird die Bearbeitungszeit unnötig lang, da nur eine geringe Zerspannungsleistung erreichbar ist. Hinzu kommt noch, daß sich eine unregelmäßige Oberfläche der Fase ergibt, wenn die Kopiervorrichtung über Späne oder einen Schweißnahtbuckel läuft, was die Qualität der anzubringenden Fase beeinträchtigt.

Der Erfindung liegt das Problem zugrunde, ein Verfahren zu schaffen, mit dem sich ein Rohrende lage- und maßgenau mit Bezug auf den Außen- oder Innendurchmesser des Rohres anfasen läßt und die Fase dabei durch Unrundheiten, Wanddickenabweichungen, Späne oder Schweißnahtbuckel möglichst unbeeinflußt bleibt.

Ausgehend von dieser Problemstellung wird ein Verfahren mit den Merkmalen des Anspruchs 1 vorgeschlagen. Das Verfahren läuft so ab, daß zunächst in einem schnellen Schruppbearbeitungsgang mit großem Vorschub die Fase bis auf eine Bearbeitungszugabe für einen nachfolgenden Schlichtbearbeitungsgang hergestellt wird, wobei ein Bearbeitungswerkzeug zunächst auf den Soll- oder Ist-Rohrinnen- oder -außendurchmesser eingestellt wird und nachfolgend die Fase lage- und maßgenau in einem kurzen Schlichtbearbeitungsgang mit kleinem Vorschub mittels desselben oder eines anderen Anfaswerkzeugs in Abhängigkeit von dem mittels einer Tastvorrichtung über den Rohrumfang ermittelten Verlauf des Außen- oder Innendurchmessers angebracht wird.

Das erfindungsgemäße Bearbeitungsverfahren besteht somit darin, daß der Schruppbearbeitungsgang durch radiales oder axiales Zustellen des Bearbeitungswerkzeuges bis gegen einen auf den Rohrdurchmesser eingestellten Anschlag erfolgt, wobei die Unrundheit des Rohres und die Wanddickenabweichungen nur insoweit berücksichtigt werden, daß durch den Schruppbearbeitungsgang an keiner Stelle des Rohrumfangs die für den Schlichtbearbeitungsgang erforderliche Bearbeitungszugabe unterschritten wird, während der Schlichtbearbeitungsgang gesteuert abläuft, indem mittels einer Tastvorrichtung der Verlauf des Außen- oder Innendurchmessers über den Rohrumfang ermittelt und das Bearbeitungswerkzeug entsprechend radial verstellt wird.

Wenn die Ist-Lage des eingespannten Rohrendes mittels einer Tastvorrichtung ermittelt wird, läßt sich das Anfaswerkzeug unter Berücksichtigung der Ist-Lage des Rohrendes gesteuert schnell an das Rohrende heranfahren, so daß sich ggf. eine Unterscheidung zwischen einem schnellen Schruppbearbeitungsgang und einem Schlichtbearbeitungsgang erübrigt bzw. sich beide Bearbeitungsgänge mit demselben Bearbeitungswerkzeug beschleunigt durchführen lassen

Ausgehend von der vorgenannten Aufgabenstellung wird ein abgewandeltes Verfahren vorgeschlagen, das besonders für dünnwandige Rohre mit im wesentlichen gleichmäßiger Wandstärke, insbesondere geschweißte Rohre, geeignet ist und das erfindungsgemäß so abläuft, daß zunächst das Rohrende mittels einer radialen Spannvorrichtung im wesentlichen kreisrund gedrückt wird, anschließend der Ist-Außen- oder -Innendurchmesser gemessen und die Fase lage- und maßgenau in Abhängigkeit von dem ermittelten Ist-Innen- oder -Außendurchmesser des Rohrendes bearbeitet wird. Bei diesem Verfahren wird die Überlegung zugrunde gelegt, daß es bei einem Rohr mit im wesentlichen gleichmäßiger Wandstärke nur darauf ankommt, ein im wesentlichen kreisrundes Rohrende zu erhalten, was durch die radiale Spannvorrichtung erreicht wird, um dann die Fase entsprechend dem gemessenen Ist-Außen- oder -Innendurchmesser lage- und maßgenau anzufertigen, da in diesem Fall kein von der Kreisform abweichender Verlauf des Außen- oder Innendurchmessers gegeben ist, d. h. weder eine Ovalität noch ein Mittenversatz des Außendurchmessers bezüglich des Innendurchmessers, wie dies bei nahtlos gezogenen dickwandigen Rohren vorkommen kann.

Wenn vor dem Anfasen die Ist-Lage des eingespannten Rohrendes mittels eines Tasters ermittelt wird, läßt sich das Anfaswerkzeug unter Berücksichtigung der Ist-Lage des Rohrendes gesteuert schnell an das Rohrende heranfahren, so daß sich die Fase direkt lage- und maßgenau in Abhängigkeit von dem ermittelten Ist-Innen- oder -Außendurchmesser des Rohrendes anbringen läßt, ggf unter Vorschaltung eines Schruppbearbeitungsganges mit großem Vorschub mit einem auf den Soll- oder Ist-Außen- oder -Innendurchmesser des Rohrendes einschließlich einer Bearbeitungszugabe für einen nachfolgenden Schlichtbearbeitungsgang eingestellten Bearbeitungswerkzeug, das ein anderes oder dasselbe Faswerkzeug sein kann, das auch für das Durchführen des Schlichtbearbeitungsganges verwendet wird.

Für den Schruppbearbeitungsgang kann das Bearbeitungswerkzeug vor dem Bearbeiten einer Charge von Rohren mit gleichem Solldurchmesser auf den Sollwert des Rohraußen- oder -innendurchmessers eingestellt werden. In diesem Fall muß die Bearbeitungszugabe für den Schlichtbearbeitungsgang so bemessen werden, daß die sich aus Erfahrung ergebende Wanddickenabweichung und Unrundheit der Rohre berücksichtigt werden.

Um beim Schlichtbearbeitungsgang möglichst wenig Material entfernen zu müssen, wodurch sich die Bearbeitungszeit weiter verkürzen läßt, kann der Ist-Außen- oder der Ist-Innendurchmesser vor dem Schruppbearbeitungsgang gemessen und das Bearbeitungswerkzeug für den Schruppbearbeitungsgang auf einen Kleinstwert der Bearbeitungszugabe für den Schlichtbearbeitungsgang unter Berücksichtigung des Verlaufs des Außen- oder Innendurchmessers eingestellt werden.

Ist eine Steuervorrichtung zum Steuern der verschiedenen Bearbeitungsvorgänge vorhanden, insbesondere eine CNC-Steuerung mit einem Speicher, läßt sich der Verlauf des Außen- und Innendurchmessers vor dem Schlichtbearbeitungsgang mittels der Tastvorrichtung ermitteln, in der Steuervorrichtung speichern und zum Steuern des lage- und maßgenauen Anbringens der Fase im Schlichtbearbeitungsgang in Abhängigkeit von dem Verlauf des Außen- oder Innendurchmessers verwenden. Dies kann bereits vor dem Schruppbearbeitungsgang erfolgen, so daß sich die Einstellung des Schruppwerkzeugs mit diesen Werten in der bereits angegebenen Weise durchführen läßt, während das Schlichtwerkzeug in Abhängigkeit von dem Verlauf des Außen- oder Innendurchmessers mittels der gespeicherten Werte angesteuert wird.

Ebenso ist es möglich, den Verlauf des Außen- oder Innendurchmessers nach dem Schruppbearbeitungsgang und vor dem Schlichtbearbeitungsgang mittels der Tastvorrichtung zu ermitteln, so daß sich die ermittelten Werte nur zum Steuern des lage- und maßgenauen Anbringens der Fase im Schlichtbearbeitungsgang verwenden lassen.

Des weiteren ist es auch möglich, den Verlauf des Außen- oder Innendurchmessers während des Schlichtbearbeitungsgangs mittels der Tastvorrichtung zu ermitteln und direkt zum Steuern des maßgenauen Anbringens der Fase im Schlichtbearbeitungsgang in Abhängigkeit von dem Verlauf des Außen- oder Innendurchmessers zu verwenden. In diesem Fall dient die Tastvorrichtung als Kopiertaster und kann mechanisch direkt oder hydraulisch bzw. elektrisch indirekt über die Steuervorrichtung mit dem Bearbeitungswerkzeug in Wirkverbindung stehen.

Um bei dünnwandigen, insbesondere geschweißten Rohren, die eine große Unrundheit bzw. Ovalität aufweisen können, zu vermeiden, daß sich ein Schruppbearbeitungsgang aufgrund einer die Rohrwanddicke überschreitenden Ovalität bzw. Unrundheit gar nicht auf dem gesamten Rohrumfang durchführen läßt, läßt sich vorteilhafterweise eine Spannvorrichtung zum radialen Spannen des Rohrendes verwenden, mit der sich das unrunde bzw. ovale Rohrende radial so verformen läßt, daß praktisch die Kreisform erreicht wird.

Wenn die dünnwandigen, insbesondere geschweißten Rohre eine im wesentlichen gleichmäßige Wandstärke aufweisen, ist ein Abtasten des Verlaufs des Außen- und Innendurchmessers nicht erforderlich, vielmehr läßt sich der Schruppbearbeitungsvorgang und Schlichtbearbeitungsvorgang in Abhängigkeit von dem gemessenen Ist-Außen- oder -Innendurchmesser durchführen.

Da in der Regel verhältnismäßig lange Rohre mit einer Fase am Rohrende versehen werden, muß dieses Rohr zusätzlich an dem aus der Spannvorrichtung herausragenden Bereich abgestützt werden. Je nachdem, an welcher Stelle des Rohres die Stütze angeordnet ist, biegt sich das Rohr durch, so daß die Achse des eingespannten Rohrendes nicht genau waagerecht verläuft. Des weiteren ergibt sich eine Abweichung von der Waagerechten bei einem vom Soll-Durchmesser abweichenden Ist-Durchmesser, wenn die Unterstützung für das Rohr und die Spannvorrichtung auf den Soll-Durchmesser ausgerichtet sind, so daß sich bei der Stützvorrichtung, die das Rohr von unten am Außenumfang unterstützt, eine Höhenabweichung ergibt. Um diese Höhenabweichung auszugleichen, kann die Achse des eingespannten Rohrendes vorteilhafterweise waagerecht eingestellt werden, indem der Ist-Außen- oder der Ist-Innendurchmesser ermittelt und die Höheneinstellung der Unterstützung relativ zur Einspannung entsprechend der Abweichung des Rohraußen- oder -innendurchmessers vom Sollwert korrigiert wird. Auf diese Weise wird das Stirnende des eingespannten Rohrendes stets senkrecht zur dort verlaufenden Rohrachse bearbeitet.

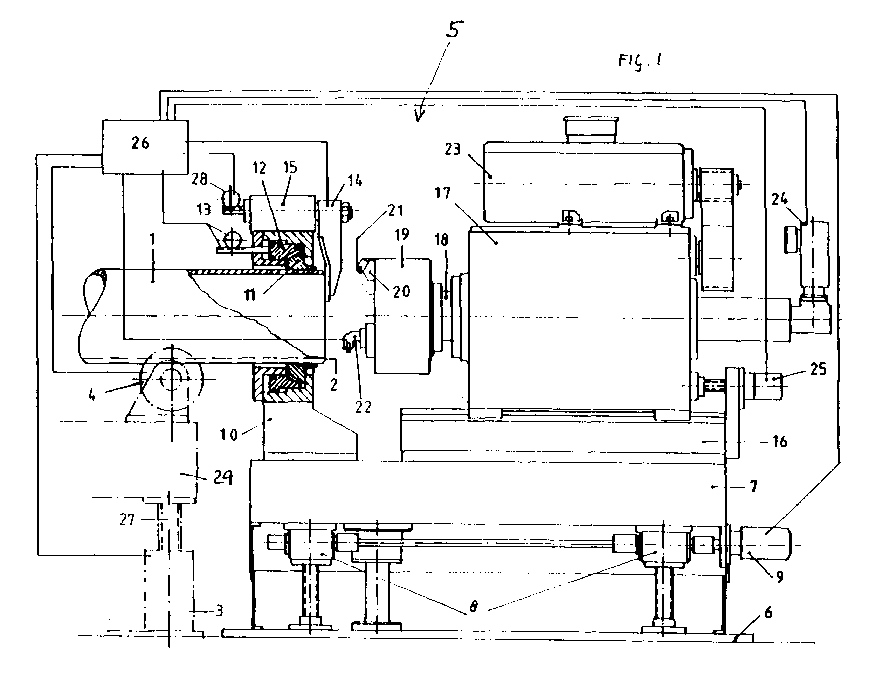

Die Erfindung wird nachstehend anhand eines in der Zeichnung dargestellten Ausführungsbeispiels des näheren erläutert.

Ein Rohr 1, dessen Stirnseite 2 mit einer Fase, z. B. einer Schweißfase, versehen werden soll, liegt mit seinem Außenumfang auf einer Stützrolle 4 auf, die über eine Höheneinstellvorrichtung 27 an einer Rohrstütze 3 gelagert ist, und wird mit ihrem Ende an einer Spannvorrichtung 10 gehalten. Mehrere Stützrollen 4 können entlang eines Trägers 29 oberhalb von mehreren Rohrstützen 3 und Höheneinstellvorrichtungen 27 angeordnet sein, wobei die dargestellte erste Stützrolle 4 zur Spannvorrichtung 10 einen größeren Abstand als dargestellt aufweist. Die Spannvorrichtung 10 ist Teil einer Fasmaschine 5, die auf einem Fundament 6 ebenso wie die Rohrstütze 3 angeordnet ist. Ein Hubtisch 7 stützt sich über Hubvorrichtungen 8 auf dem Fundament 6 ab, wobei sich der Hubtisch 7 mittels einer auf die Hubvorrichtungen 8 wirkenden Antriebseinheit 9 in der Höhe verstellen läßt.

Die am Hubtisch 7 befestigte Spannvorrichtung 10 weist radiale Spannbacken 11 auf, die das Ende des Rohres 1 einspannen, wenn ein Spannkolben 12 axial verschoben wird, so daß sich die Spannbacken 11 aufgrund der zwischen dem Spannkolben 12 und den Spannbacken 11 angeordneten Keilflächen radial gegen das Rohr 1 verspannen. Mit dem Spannkolben 12 ist ein Weggeber 13 verbunden, so daß sich aus der Axialverschiebung des Spannkolbens 12 der Ist-Außendurchmesser des Rohres ermitteln läßt.

Ein Anschlag 14 auf einer Welle 15 ist schwenkbar an der Spannvorrichtung 10 gelagert und wird in den Bereich der Stirnseite 2 des Rohres 1 geschwenkt, wenn ein neues Rohr 1 in die Spannvorrichtung 10 eingeführt wird, um eine Fase anzubringen. Hierzu wird das Rohr 1 mittels einer an der Stützrolle 4 angreifenden Vorschubvorrichtung oder einer direkt am Rohr 1 angreifenden separaten Treibereinheit bis zum Anschlag an den Anschlag 14 bewegt. Danach wird die Spannvorrichtung 10 betätigt, um das Rohrende einzuspannen. Nach dem Einspannen des Rohrendes wird der Anschlag 14 aus dem Bereich der Stirnseite 2 des Rohres 1 herausgeschwenkt. Der Anschlag 14 kann gegen Federkraft begrenzt axial verschiebbar gelagert sein, so daß ein mit der Welle 15 gekuppelter Weggeber eine Lageanzeige der Stirnseite 2 des Rohres 1 mit Bezug auf die Spannvorrichtung 10 liefert.

Ein Getriebegehäuse 17 für eine Spindel 18 mit einer Planscheibe 19 ist axial verschiebbar auf Führungsbahnen 16 des Hubtisches 7 angeordnet. Die Drehachse der Spindel 18 und der Planscheibe 19 liegt koaxial zur Spannvorrichtung 10. An der Planscheibe 19 sind ein oder mehrere radial verstellbare Werkzeughalter 20 für ein Anfaswerkzeug 21 angeordnet.

Bei der dargestellten Ausführungsform ist diametral gegenüber zum Anfaswerkzeug 21 eine Meß- bzw. Tastvorrichtung 22 an der Planscheibe angeordnet und dreht sich somit mit der Planscheibe 19.

Am Getriebegehäuse 17 ist ein Spindelantriebsmotor 23 befestigt, der in bekannter Weise über Keil- oder Zahnriemen und Zahnräder die Spindel 18 mit der Planscheibe 19 in Drehung versetzt und sich auf eine wählbare Drehgeschwindigkeit einstellen läßt. Ein Vorschubantrieb 24 für den Werkzeughalter 20 greift axial in die hohle Spindel 18 ein und setzt seine axiale Bewegung über im einzelnen nicht dargestellte Zwischenelemente in bekannter Weise in eine radiale Vorschubbewegung des Werkzeughalters 20 um. Ein weiterer Vorschubantrieb 25, der am Hubtisch 7 befestigt ist und am Getriebegehäuse 17 angreift, bewirkt die axiale Verschiebung des Getriebegehäuses 17 und damit der Planscheibe 19 mit dem Werkzeughalter 20 und dem Anfaswerkzeug 21.

Eine Steuereinheit 26, vorzugsweise in Form einer CNC-Steuerung, ist über Signal- und Steuerleitungen mit der Spannvorrichtung 10, den Weggebern 13 und 28, einem Schwenkantrieb für den Anschlag 14, dem Antriebsmotor 23 für die Planscheibe 19, dem Vorschubantrieb 24 für den Werkzeughalter 20, dem Vorschubantrieb 25 für die axiale Verschiebung des Getriebegehäuses 17, der Antriebseinheit 9 für den Hubtisch 7, dem Antrieb für die Stützrolle 4 und der Höheneinstellvorrichtung 27 in der Rohrstütze 3 verbunden.

Soll eine Charge von Rohren 1, die mit einem bestimmten Soll-Durchmesser angeliefert werden, mit einer Schweißfase versehen werden, wird jeweils ein Rohr auf die Stützrolle 4 der Rohrstütze 3 aufgelegt und mit der Stirnseite 2 durch die Spannvorrichtung 10 geschoben, bis die Stirnseite 2 an dem Anschlag 14 anliegt. Daraufhin wird mittels der Steuereinheit 26 die Spannvorrichtung 10 betätigt, indem der Spannkolben 12 druckbeaufschlagt und axial verschoben wird. Die Keilflächen zwischen dem Spannkolben 12 und den Spannbacken 11 bewirken, daß sich die Spannbacken 11 radial gegen das Rohrende legen und es einspannen.

Vor dem Einspannen eines Rohres 1 werden die Stützrolle 4 mittels der Höheneinstellvorrichtung 27 und die Spannvorrichtung 10 mittels der Antriebseinheit 9 für die Hubvorrichtung 8 am Hubtisch 7 auf eine Höhe eingestellt, die eine waagerechte Lage der Rohrachse mit Bezug auf den Solldurchmesser des Rohres 1 bewirkt. Diese Höheneinstellung wird durch die Steuereinheit 26 angesteuert. Bei dieser Ansteuerung wird bereits die ggf. vorhandene Durchbiegung des Rohres 1 berücksichtigt, die sich aufgrund des Abstandes zwischen der Spannvorrichtung 10 und der Stützrolle 4 aus dem Eigengewicht des Rohres 1 ergibt. Entscheidend ist, daß die Rohrachse im Bereich der Spannvorrichtung 10 waagerecht verläuft, was bei der Anordnung mehrerer Stützrollen 4 entlang dem Träger 29 ausreichend genau gegeben ist.

Nachdem das Rohr 1 in der Spannvorrichtung 10 eingespannt ist und über den Weggeber 28 die Lage der Stirnseite 2 in der Spannvorrichtung 10 gemessen ist, wird der Anschlag 14 aus dem Bereich der Stirnseite 2 des Rohres 1 weggeschwenkt, so daß sich das Getriebegehäuse 17 mit der Spindel 18, der Planscheibe 19, dem Werkzeughalter 20, dem Anfaswerkzeug 21 und der Meß- bzw. Tastvorrichtung 22 in die Nähe der Stirnseite 2 des Rohres 1 mittels des Vorschubantriebes 25 verfahren läßt. Durch die Steuereinheit 26 wird die Planscheibe 19 in Drehung versetzt, und es wird mittels der Meß- bzw. Tastvorrichtung 22 der Ist-Innendurchmesser und ggf der Ist-Außendurchmesser des Rohres 1 vermessen, falls dieser nicht über den Weggeber 13, wie bereits erwähnt, ermittelt wurde. Weicht der Ist-Außen- oder Ist-Innendurchmesser des Rohres 1 vom Solldurchmesser ab, ergibt sich daraus eine unterschiedliche Höhenlage der Rohrachse in der Spannvorrichtung 10 und im Bereich der Stützrolle(n) 4, die eine Abweichung der Achsenlage in der Spannvorrichtung 10 von der Waagerechten bewirkt. Durch die Steuereinheit 26 wird daher eine Höhenverstellung des Hubtisches 7 oder der Stützrolle(n) 4 durch Betätigen der Antriebseinheit 9 für die Hubvorrichtung 8 oder der Höheneinstellvorrichtung 27 ausgelöst, die nach Richtung und Größe so bemessen ist, daß die Rohrachse im Bereich der Spannvorrichtung 10 waagerecht liegt, so daß das Anfasen genau senkrecht zur Rohrachse erfolgt.

Gleichzeitig mit dem Messen des Ist-Durchmessers des Rohres 1 läßt sich mittels der Meß- bzw. Tastvorrichtung 22 der Verlauf des Außen- oder Innendurchmessers über den Rohrumfang ermitteln und in der Steuereinheit 26 speichern.

Zum Durchführen des Schruppbearbeitungsganges wird nunmehr, durch die Steuereinheit 26 gesteuert, das Anfaswerkzeug 21 durch radiales Verstellen des Werkzeughalters 20 in den Bereich der Stirnseite 2 gebracht und die Planscheibe 19 wird in eine schnelle Drehung, entsprechend der Bearbeitungsgeschwindigkeit im Schruppbearbeitungsgang, gesetzt. Das Anfaswerkzeug 21 mit dem Werkzeughalter 20 wird radial zugestellt und mit einer Vorschubgeschwindigkeit entsprechend dem Schruppbearbeitungsgang verfahren, bis die erforderliche Bearbeitungszugabe für einen nachfolgenden Schlichtbearbeitungsgang erreicht ist. Diese Bearbeitungszugabe läßt sich aus den über den Rohrumfang ermittelten Werten des Außen- oder Innendurchmessers berechnen und über die Steuereinheit 26 an dem Werkzeughalter 20 durch entsprechendes Verstellen des Vorschubantriebs 24 einstellen.

Ist der Schruppbearbeitungsgang auf diese Weise in der hierfür möglichen, kürzesten Zeit beendet, wird auf den Schlichtarbeitsgang umgeschaltet. Der Schlichtarbeitsgang erfolgt mit einer verringerten Vorschubgeschwindigkeit mit minimaler Zerspanung, um die geforderte Oberflächengüte sowie Lage- und Maßgenauigkeit zu erreichen. Der Schruppbearbeitungsgang und der Schlichtbearbeitungsgang lassen sich mit demselben oder mit unterschiedlichen Werkzeugen durchführen. Da die Fase lage- und maßgenau bezüglich des Außen- oder des Innendurchmessers hergestellt werden soll - für eine Schweißfase muß die Fase lage- und maßgenau gegenüber dem Innendurchmesser des Rohres 1 erstellt werden - wird der Vorschub des Schlichtbearbeitungsganges beendet, wenn das vorgegebene Maß erreicht ist, wobei dieser Schlichtbearbeitungsgang so durchgeführt wird, daß das Anfaswerkzeug 21 am Werkzeughalter 20 entsprechend dem Verlauf des Innendurchmessers, durch die Steuereinheit 26 gesteuert, radial geführt wird. Da das Rohr 1 in der Spannvorrichtung 10 mit seiner Außenfläche eingespannt ist, bedeutet dies, daß die Rohrinnenfläche gegenüber der Rohraußenfläche exzentrisch und unrund laufen kann. Da indessen der Verlauf des Innendurchmessers durch die Meß- bzw. Tastvorrichtung ermittelt und in der Steuereinheit 26 gespeichert wurde, läßt sich der Werkzeughalter 20 mit dem Anfaswerkzeug 21 mittels des Vorschubantriebes 24 genau entsprechend dem Verlauf des Rohrinnendurchmessers nachführen, so daß die Fase lage- und maßgenau bezüglich dieser Rohrinnenfläche erstellt wird.

Die vorbeschriebene Arbeitsweise der erfindungsgemäßen Fasmaschine bezieht sich auf eine alle Einstellungen und Abläufe berücksichtigende CNC-Steuerung mittels der Steuereinheit 26. Es ist möglich, diese CNC-Steuerung zu vereinfachen oder auch ganz darauf zu verzichten.

Um z. B. die Rohrachse im Bereich der Spannvorrichtung 10 waagerecht einzustellen, kann der Ist-Durchmesser des eingespannten Rohres 1 von Hand gemessen werden und entweder die Stützrolle 4 oder der Hubtisch 7 von Hand höhenverstellt werden. Ebenso läßt sich aufgrund des gemessenen Ist-Durchmessers ein Anschlag an der Planscheibe 19 so einstellen, daß das Anfaswerkzeug den Schruppbearbeitungsgang mit einer auf jeden Fall ausreichenden Bearbeitungszugabe für den Schlichtbearbeitungsgang durchführt.

Der Schlichtbearbeitungsgang läßt sich dann mittels eines weiteren, an der Planscheibe 19 angeordneten Anfaswerkzeugs an einem radial verstellbaren Werkzeughalter durchführen, dem eine Tastvorrichtung zugeordnet ist, die an der Rohrinnenwand anliegt, so daß der Schlichtbearbeitungsgang als mechanischer, auf den Innendurchmesser des Rohres bezogener Kopiervorgang abläuft.

Will man nur einen Werkzeughalter 20 verwenden, lassen sich an dem Werkzeughalter 20 zwei radial versetzte Anfaswerkzeuge anordnen, von denen das eine für den Schruppbearbeitungsvorgang und das andere für den Schlichtbearbeitungsvorgang verwendet wird.

Die Tastvorrichtung kann als Kopiervorrichtung, wie bereits erwähnt, direkt mechanisch mit dem Werkzeughalter 20 gekoppelt sein, sie kann jedoch auch berührungslos arbeiten und über die Steuereinheit 26 mit dem Vorschub des Werkzeughalters 20 in Wirkverbindung stehen.

Mit dem erfindungsgemäßen Verfahren lassen sich somit sowohl mittels einer mechanischen Steuerung als auch mittels einer CNC-Steuerung Rohrenden mit lage- und maßgenauen Fasen versehen, unabhängig davon, ob nahtlose oder geschweißte Rohre angefast werden.

Da die Spannvorrichtung 10 in der Lage ist, erhebliche Spannkräfte aufzubringen, ist es möglich, stark unrunde bzw. ovale Rohre mittels der radial wirkenden Spannbacken 11 in eine praktisch kreisrunde Form zu drücken, was insbesondere bei dünnwandigen, geschweißten Rohren möglich ist, wodurch das Anfasen beschleunigt und vereinfacht wird, da das Anfaswerkzeug 21 keine großen radialen Wege beim Umlauf in Abhängigkeit von dem Rohraußen- oder -innendurchmesser zurückzulegen braucht.

Wenn dieses kreisrund gedrückte Rohr eine im wesentlichen gleichmäßige Wandstärke aufweist, genügt es, den Ist-Außen- oder -Innendurchmesser des Rohrendes zu messen und den Schruppbearbeitungsvorgang und den Schlichtbearbeitungsvorgang in Abhängigkeit von diesem Ist-Durchmesser zu steuern, um die Schweißfase schnell und maß- sowie lagegenau am Rohrende anzubringen. Ist der Spannkolben 12, wie bereits beschrieben, mit einem Weggeber 13 gekuppelt, läßt sich der Weg des Spannkolbens 12 direkt in den Ist-Außendurchmesser des Rohres umrechnen und zum Ansteuern des Faswerkzeugs 21 am Werkzeughalter 20 verwenden. Eine zusätzliche Tastvorrichtung 22 an der Planscheibe 19 ist in diesem Fall nicht mehr erforderlich bzw. braucht nicht, falls sie vorhanden ist, benutzt zu werden.

Die dargestellte Vorrichtung, die sowohl den Weggeber 13 als auch die Tastvorrichtung 22 aufweist, läßt sich somit einerseits zum Anfasen von dünnwandigen Rohren mit gleichmäßiger Wandstärke, insbesondere geschweißten Rohren, die mittels der Spannvorrichtung 10 in eine kreisrunde Form gedrückt werden, verwenden, ohne die Tastvorrichtung 22 zu verwenden, wenn über den Weggeber 13 der Ist-Rohraußendurchmesser ermittelt und das Anfaswerkzeug 21 am Werkzeughalter 20 mittels der Steuervorrichtung 26 entsprechend angesteuert wird. Andererseits läßt sich dieselbe Vorrichtung auch zum Anfasen dickwandiger nahtloser Rohre verwenden, wenn mittels der Tastvorrichtung 22 der Verlauf des Innendurchmessers des Rohres abgetastet und über die Steuervorrichtung 26 zum Ansteuern des Faswerkzeuges 21 am Werkzeughalter 20 benutzt wird. In diesem Fall braucht der Weggeber 13 nicht benutzt zu werden oder kann zum Einstellen des Schruppbearbeitungsgangs benutzt werden, während die Tastvorrichtung 22 nur zum Steuern des Schlichtbearbeitungsgangs eingesetzt wird.

Des weiteren läßt sich das Anfasen beschleunigen und vereinfachen, wenn die Ist-Lage der eingespannten Rohrstirnseite 2 mit Bezug auf das Faswerkzeug 21 bzw. die Faswerkzeuge mittels einer Tastvorrichtung in Form des mit dem Anschlag 14 verbundenen Gebers 28 ermittelt wird. Aufgrund der Ist-Lagebestimmung der eingespannten Rohrstirnseite 2 läßt sich nämlich das Faswerkzeug 21 schnell und genau an die Rohrstirnseite 2 heranfahren und kann dann zumindest den Schruppbearbeitungsgang mit großem Vorschub in Abhängigkeit vom z. B. mittels des Weggebers 13 gemessenen Rohraußendurchmesser durchführen, während der Schlichtbearbeitungsgang in der beschriebenen Weise abhängig vom Verlauf des Innendurchmessers des Rohres unter Benutzung der Tastvorrichtung 22 abläuft. Bei dünnwandigen Rohren mit kleinen Wanddickentoleranzen läßt sich auch der Schlichtbearbeitungsgang ausschließlich in Abhängigkeit vom gemessenen Ist-Außen- oder - Innendurchmesser ausreichend lage- und maßgenau durchführen, ggf unter Vorschaltung eines schnellen Schruppbearbeitungsganges.

## Patentansprüche

1. Verfahren zum mit Bezug auf den Außen- oder Innendurchmesser eines Rohres lage- und maßgenauen Anfasen eines eingespannten Rohres, bei dem die Fase lage- und maßgenau in Abhängigkeit von dem mittels einer Tastvorrichtung über den Rohrumfang ermittelten Verlauf des Außen- oder Innendurchmessers bearbeitet wird, wobei in einem kurzen Schlichtbearbeitungsgang mit kleinem Vorschub die Fase lage- und maßgenau in Abhängigkeit von dem ermittelten Verlauf des Außen- oder Innendurchmessers fertig bearbeitet wird **dadurch gekennzeichnet**, daß
- die Ist-Lage des eingespannten Rohrendes mittels einer Tastvorrichtung ermittelt,
- ein Bearbeitungswerkzeug unter Berücksichtigung der Ist-Lage des Rohrendes gesteuert schnell an das Rohrende herangefahren,
- in einem schnellen Schruppbearbeitungsgang mit großem Vorschub mit dem auf den Soll- oder Ist-Rohrinnen- oder -außendurchmesser eingestellten Bearbeitungswerkzeug die Fase bis auf eine Bearbeitungszugabe für einen nachfolgenden Schlichtbearbeitungsgang erstellt wird.

2. Verfahren nach Anspruch 1, **dadurch gekennzeichnet**, daß das Rohrende vor der spangebenden Bearbeitung mittels einer radialen Spannvorrichtung im wesentlichen kreisrund gedrückt wird

3. Verfahren nach Anspruch 2, **dadurch gekennzeichnet**, daß zunächst das Rohrende mittels einer radialen Spannvorrichtung im wesentlichen kreisrund gedrückt wird, anschließend der Ist-Außen- oder -Innendurchmesser gemessen und die Fase lage- und maßgenau in Abhängigkeit von dem ermittelten Ist-Innen- oder -Außendurchmesser des Rohrendes fertig bearbeitet wird.

4. Verfahren nach Anspruch 1, 2 oder 3, **dadurch gekennzeichnet**, daß das Bearbeitungswerkzeug für den Schruppbearbeitungsgang auf den Sollwert des Rohrdurchmessers eingestellt wird.

5. Verfahren nach Anspruch 1, 2 oder 3, **dadurch gekennzeichnet**, daß der Ist-Außen- oder Ist-Innendurchmesser vor dem Schruppbearbeitungsgang gemessen und das Bearbeitungswerkzeug für den Schruppbearbeitungsgang auf einen Kleinstwert der Bearbeitungszugabe für den Schlichtbearbeitungsgang unter Berücksichtigung des Verlaufs des Außen- oder Innendurchmessers eingestellt wird.

6. Verfahren nach einem der Ansprüche 1, 4 oder 5, **dadurch gekennzeichnet**, daß der Verlauf des Außen- oder Innendurchmessers vor dem Schlichtbearbeitungsgang mittels der Tastvorrichtung ermittelt, in einer Steuervorrichtung gespeichert und zum Steuern des lage- und maßgenauen Anbringens der Fase im Schlichtbearbeitungsgang in Abhängigkeit von dem Verlauf des Außen- oder Innendurchmessers verwendet wird.

7. Verfahren nach einem der Ansprüche 1, 4 oder 5, **dadurch gekennzeichnet**, daß der Verlauf des Außen- oder Innendurchmessers während des Schlichtbearbeitungsgangs mittels der Tastvorrichtung ermittelt und direkt zum Steuern des lage- und maßgenauen Anbringens der Fase im Schlichtbearbeitungsgang in Abhängigkeit von dem Verlauf des Außen- oder Innendurchmessers verwendet wird.

8. Verfahren nach einem oder mehreren der Ansprüche 1 bis 7, **dadurch gekennzeichnet**, daß die Achse des eingespannten Rohrendes waagerecht eingestellt wird, indem der Ist-Außen- oder Ist-Innendurchmesser ermittelt und die Höheneinstellung der Unterstützung relativ zur Einspannung entsprechend der Abweichung des Rohraußen- oder -innendurchmessers vom Sollwert korrigiert wird.

## Claims

1. A method for positionally and dimensionally accurate bevelling of a clamped pipe with regard to the external or internal diameter of said pipe, with which the bevel is machined positionally and dimensionally accurately as a function of the profile of the external or internal diameter determined over the pipe circumference by means of a probe device, the bevel being finished positionally and dimensionally accurately as a function of the determined profile of the external or internal diameter in a short finish-machining operation with slight forward feed,
**characterised in that**
- the actual position of the clamped pipe end is determined by means of a probe device,
- taking into account the actual position of the pipe end, a machining tool is brought up to the pipe end at a controlled speed,
- in a quick rough-machining operation with considerable forward feed and with the machining tool adjusted to the desired or actual internal or external pipe diameter, the bevel is formed down to a machining allowance for a subsequent finish-machining operation.

2. A method according to claim 1, **characterised in that** the pipe end is pressed into a substantially circular shape by means of a radial clamping device prior to machining.

3. A method according to claim 2, **characterised in that** first of all the pipe end is pressed into a substantially circular shape by means of a radial clamping device, and then the actual external or internal diameter is measured and the bevel is finished positionally and dimensionally accurately as a function of the determined actual internal or external diameter of the pipe end.

4. A method according to claim 1, 2 or 3, **characterised in that** the machining tool for the rough-machining operation is adjusted to the desired value of the pipe diameter.

5. A method according to claim 1, 2 or 3, **characterised in that** the actual external or actual internal diameter is measured prior to the rough-machining operation and the machining tool for the rough-machining operation is adjusted to a minimum value of machining allowance for the finish-machining operation, taking account of the profile of the external or internal diameter.

6. A method according to one of claims 1, 4 or 5, **characterised in that** the profile of the external or internal diameter is determined prior to the finish-machining operation by means of the probe device, stored in a control device and used to control positionally and dimensionally accurate application of the bevel in the finish-machining operation as a function of the profile of the external or internal diameter.

7. A method according to one of claims 1, 4 or 5, **characterised in that** the profile of the external or internal diameter is determined during the finish-machining operation by means of the probe device and used directly to control the positionally and dimensionally accurate application of the bevel in the finish-machining operation as a function of the profile of the external or internal diameter.

8. A method according to one or more of claims 1 to 7, **characterised in that** the axis of the clamped pipe end is adjusted to horizontal by determining the actual external or actual internal diameter and correcting the height setting of the support relative to clamping in accordance with the deviation of the external or internal pipe diameter from the desired value.

## Revendications

1. Procédé pour biseauter un tube serré, de manière précise quant à la position et aux dimensions, par rapport au diamètre extérieur ou au diamètre intérieur du tube, dans lequel le biseau est usiné, de manière précise, quant à la position et aux dimensions, en fonction de l'allure du diamètre extérieur ou du diamètre intérieur, déterminée au moyen d'un dispositif de palpage, sur le pourtour du tube, le biseau étant usiné fini, de manière précise quant à la position et aux dimensions, en fonction de l'allure déterminée du diamètre extérieur ou du diamètre intérieur, au cours d'une courte opération d'usinage de finition à petite vitesse d'avance, caractérisé en ce que :
- la position réelle de l'extrémité encastrée du tube est déterminée au moyen d'un dispositif de palpage,
- un outil d'usinage est approché rapidement, de manière commandée, de l'extrémité du tube, en tenant compte de la position réelle de l'extrémité du tube,
- au cours d'une opération rapide d'usinage de dégrossissage à grande vitesse d'avance, avec l'outil d'usinage réglé sur le diamètre intérieur ou extérieur de consigne ou réel, le biseau est réalisé à l'exception d'une réserve d'usinage pour une étape suivante d'usinage de finition.

2. Procédé selon la revendication 1, caractérisé en ce qu'avant l'usinage par enlèvement de copeaux, l'extrémité du tube est comprimée de manière sensiblement circulaire, au moyen d'un dispositif radial de serrage.

3. Procédé selon la revendication 2, caractérisé en ce que l'extrémité du tube est d'abord comprimée de manière sensiblement circulaire, au moyen d'un dispositif radial de serrage, puis le diamètre extérieur ou intérieur réel est mesuré et le biseau est usiné fini, de manière précise quant à la position et aux dimensions, en fonction du diamètre intérieur ou extérieur réel déterminé de l'extrémité du tube.

4. Procédé selon la revendication 1, 2 ou 3, caractérisé en ce que l'outil d'usinage pour l'étape d'usinage de dégrossissage est réglé sur la valeur de consigne du diamètre du tube.

5. Procédé selon la revendication 1, 2 ou 3, caractérisé cn ce que le diamètre extérieur ou intérieur réel est mesuré avant l'étape d'usinage de dégrossissage et l'outil d'usinage pour l'étape d'usinage de dégrossissage est réglé sur une valeur minimale de la réserve d'usinage pour l'étape d'usinage de finition, en tenant compte de l'allure du diamètre extérieur ou du diamètre intérieur.

6. Procédé selon l'une des revendications 1, 4 ou 5, caractérisé en ce que l'allure du diamètre extérieur ou du diamètre intérieur est déterminée avant l'étape d'usinage de finition, au moyen du dispositif de palpage, est mémorisée dans un dispositif de commande et est utilisée pour commander la réalisation du biseau, de manière précise quant à la position et aux dimensions, au cours de l'étape d'usinage de finition, en fonction de l'allure du diamètre extérieur ou du diamètre intérieur.

7. Procédé selon l'une des revendications 1, 4 ou 5, caractérisé en ce que l'allure du diamètre extérieur ou du diamètre intérieur est déterminée, pendant l'étape d'usinage de dégrossissage, au moyen du dispositif de palpage et est utilisée directement pour commander l'exécution du biseau, précise quant à la position et aux dimensions, au cours de l'étape d'usinage de dégrossissage, en fonction de l'allure du diamètre extérieur ou du diamètre intérieur.

8. Procédé selon l'une ou plusieurs des revendications 1 à 7, caractérisé en ce que l'axe de l'extrémité encastrée du tube est réglé horizontalement, en ce que le diamètre extérieur réel ou le diamètre intérieur réel est déterminé et le réglage en hauteur de l'appui par rapport à l'encastrement est corrigé en fonction de l'écart du diamètre extérieur ou du diamètre intérieur du tube par rapport à la valeur de consigne.
